# EUROPEAN PATENT SPECIFICATION

(11) **EP 3 637 044 B1**
(45) Date of publication and mention of the grant of the patent: **16.11.2022**
(21) Application number: 18199237.1
(22) Date of filing: 09.10.2018
(51) Int. Cl.: G01B 11/25, G02B 27/09

(54) **MULTI-IMAGE PROJECTOR AND ELECTRONIC DEVICE HAVING THE MULTI-IMAGE PROJECTOR**
MEHRFACHBILDPROJEKTOR UND ELEKTRONISCHE VORRICHTUNG MIT DEM MEHRFACHBILDPROJEKTOR
PROJECTEUR D'IMAGES MULTIPLES ET DISPOSITIF ÉLECTRONIQUE DOTÉ DU PROJECTEUR D'IMAGES MULTIPLES

(43) Date of publication of application: 15.04.2020
(73) Proprietor: HIMAX TECHNOLOGIES LIMITED, Tainan City 74148 (TW)
(72) Inventor: WU, Biing-Seng, 74148 Tainan City (TW); KUO, Han-Yi, 74148 Tainan City (TW); LYU, Bo-Han, 74148 Tainan City (TW); LU, Yin-Dong, 74148 Tainan City (TW); CHEN, Kuan-Ming, 74148 Tainan City (TW); TSAI, Meng-Ko, 74148 Tainan City (TW)
(74) Representative: Hoefer & Partner Patentanwälte mbB

(56) References cited:
- EP-A1- 2 363 686
- EP-A1- 3 112 923
- WO-A1-2014/102341
- CN-A- 108 490 637
- US-A1- 2010 008 588

## Description

### Background of the Invention

### 1. Field of the Invention

The present invention relates to a projector, and more particularly, to a multi-image projector applied in a 3D sensing system.

### 2. Description of the Prior Art

In order to obtain 3D images, an electronic device may use a projector for projecting a special pattern to a surrounding region, and use camera to capture the image having the special pattern, and the captured image is analyzed by a processor to obtain the depth information of the image. The conventional projector has a fixed focal length and a fixed field of view (FOV), so if the special pattern is projected to an object that is far away from the projector or too close to the projector, a resolution of the special pattern may be worsened and the depth information may not be accurately determined.

US 2010/008588 A1 discloses methods, systems, and apparatuses for estimating a location on an object in a three-dimensional scene. Multiple radiation patterns are produced by spatially modulating each of multiple first radiations with a distinct combination of one or more modulating structures, each first radiation having at least one of a distinct radiation path, a distinct source, a distinct source spectrum, or a distinct source polarization with respect to the other first radiations. The location on the object is illuminated with a portion of each of two or more of the radiation patterns, the location producing multiple object radiations, each object radiation produced in response to one of the multiple radiation patterns. Multiple measured values are produced by detecting the object radiations from the location on the object due to each pattern separately using one or more detector elements. The location on the object is estimated based on the multiple measured values.

EP 2 363 686 A1 discloses an optical apparatus including a semiconductor substrate and an edge-emitting radiation source, mounted on a surface of the substrate so as to emit optical radiation along an axis that is parallel to the surface. A reflector is fixed to the substrate in a location on the axis and is configured to reflect the optical radiation in a direction that is angled away from the surface. One or more optical elements are mounted on the substrate so as to receive and transmit the optical radiation reflected by the reflector. The optical apparatus may be used in an imaging system including an illumination assembly for projecting a pattern of optical radiation onto an object, an imaging assembly for capturing an image of the pattern on the object and a processor for processing the image so as to generate a depth map of the object.

CN 108 490 637 A discloses a laser transmitter, photoelectric equipment, a depth camera and an electronic device. The laser transmitter comprises a light source and a mask arranged on a light emitting optical path of the light source. The mask comprises a plurality of light transmission regions, wherein the light transmission regions are different in shape and/or light transmittance; or the plurality of light transmission regions are divided into multiple groups, and the groups of light transmission regions are different in shape and/or light transmittance. In the laser transmitter, photoelectric equipment, depth camera and electronic device disclosed, the light transmission regions of the mask are different in shape and/or light transmittance, or the groups of light transmission regions are different in shape and light transmittance, so that the irrelevance of a laser pattern can be improved, and thus the speed and accuracy of obtaining a depth image of the laser pattern are improved.

### Summary of the Invention

It is therefore an objective of the present invention to provide a projector, which can generate the appropriate projected image to the surrounding region based on the working distance of the projector, to solve the above-mentioned problems.

This is achieved by a projector according to claim 1, and an electronic device according to claim 9. The dependent claims pertain to corresponding further developments and improvements.

As will be seen more clearly from the detailed description following below, a projector according to claim 1 including a laser module and a lens module is provided, wherein the lens module includes a plurality of lens and a plurality of diffractive optical elements. In the operations of the projector, the laser module is arranged to generate at least one laser beam; each of the lenses is arranged to receive one of the at least one laser beam to generate a collimated laser beam; and the diffractive optical elements correspond to the lenses, respectively, and each of the diffractive optical elements is arranged to receive the collimated laser beam from the corresponding lens to generate an image, wherein at least two of the lenses have different focal lengths that correspond to different working distances of the projector, wherein the laser module comprises a plurality of laser diodes, the laser diodes are arranged to generate a plurality laser beams to the lenses, respectively, and wherein the projector is designed so that the laser diodes can be sequentially turned on to generate the laser beams to the lenses and the diffractive optical elements to generate the images, respectively, and at least a portion of the images are overlapped.

As will be seen more clearly from the detailed description following below, an electronic device is provided, wherein the electronic device includes a projector according to claim 1, a camera module and a processor. In the operations of the electronic device, the projector is arranged to generate a projected image to a surrounding environment, the camera module is arranged to capture a region of the surrounding environment to generate image data, and the processor is arranged to analyze the image data to obtain depth information of the image data. In one embodiment, the projector includes a laser module and a lens module, wherein the lens module includes a plurality of lens and a plurality of diffractive optical elements. In the operations of the projector, the laser module is arranged to generate at least one laser beam; each of the lenses is arranged to receive one of the at least one laser beam to generate a collimated laser beam; and the diffractive optical elements correspond to the lenses, respectively, and each of the diffractive optical elements is arranged to receive the collimated laser beam from the corresponding lens to generate an image, wherein at least two of the lenses have different focal lengths that correspond to different working distances of the projector. The laser module comprises a plurality of laser diodes, the laser diodes are arranged to generate a plurality laser beams to the lenses, respectively, and the projector is designed so that the laser diodes can be sequentially turned on to generate the laser beams to the lenses and the diffractive optical elements to generate the images, respectively. At least a portion of the images are overlapped. The images generated by the diffractive optical elements form the projected image of the projector.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a diagram illustrating an electronic device according to one embodiment of the present invention.
FIG. 2 is a diagram illustrating the projector according to one embodiment of the present invention.
FIG. 3 shows the laser module according to the embodiments of the present invention.
FIG. 4 shows the laser module according to other embodiments of the present invention.
FIG. 5 shows generating the projected image according to one embodiment of the present invention.
FIG. 6 shows the use of the projector when the lenses are designed to have different focal lengths according to one embodiment of the present invention.
FIG. 7 shows a laser module and a lens module according to another embodiment of the present invention.
FIG. 8 shows the laser module shown in FIG. 7 according to one embodiment of the present invention.

### Detailed Description

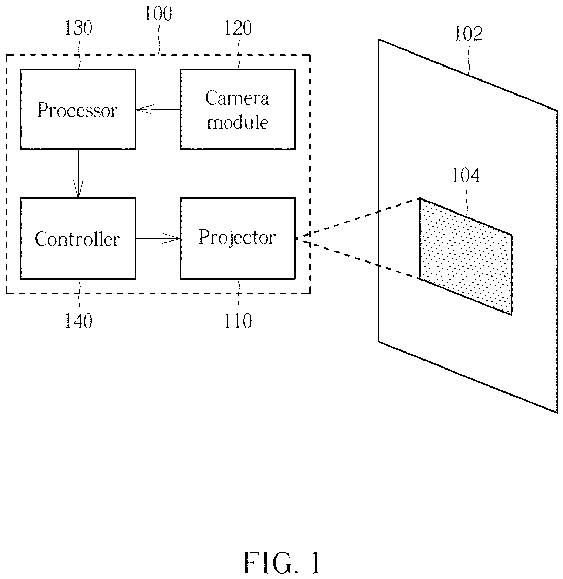

FIG. 1 is a diagram illustrating an electronic device 100 according to one embodiment of the present invention. As shown in FIG. 1, the electronic device 100 comprises a projector 110, a camera module 120, a processor 130 and a controller 140. In this embodiment, the electronic device 100 may be a smart phone or a pad or any other portable device capable of generating 3D images.

In the operation of the electronic device 100, when the electronic device 100 prepares to capture a 3D image of an object 102, firstly, the processor 130 notifies the controller 140, and the controller 140 controls the projector 110 to generate a projected image 104 to the object 102. Then, the camera module 120 captures the projected image 104 with the object 102 to generate image data. Then the processor 130 analyzes the image data to obtain the depth information of the image data to generate the 3D image. As mentioned in the background of the invention, the resolution of the projected image 104 may be worsened if the object 102 is far away from the projector 110 or the object 102 is too close to the projector 110. Therefore, the embodiments of the present invention provide some designs of the projector 110 to make the projected image 104 on the object 102 have the better resolution or FOV.

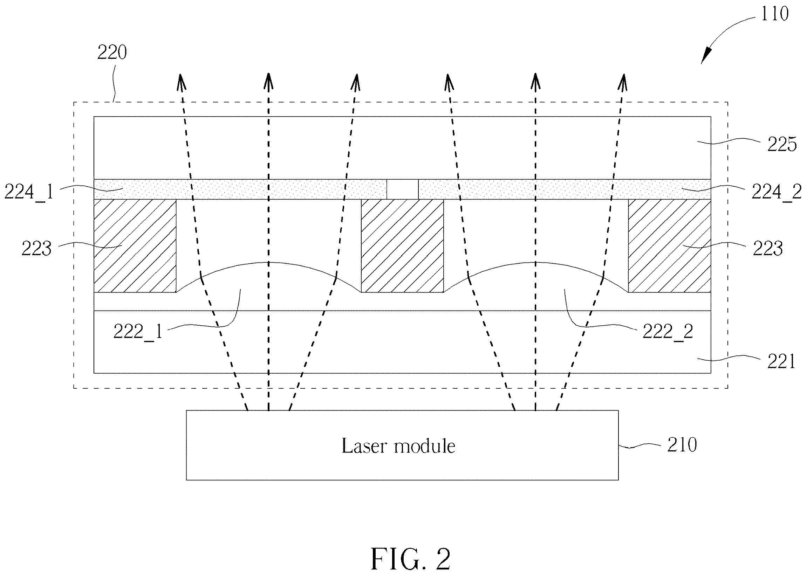

FIG. 2 is a diagram illustrating the projector 110 according to one embodiment of the present invention. As shown in FIG. 2, the projector 110 comprises a laser module 210 and a lens module 220, where the lens module 220 comprises a substrate 221, two lens 222_1 and 222_2 imprinted on a surface of the substrate 221, a substrate 225, two diffractive optical elements (DOE) 224_1 and 224_2 imprinted on a surface of the substrate 225, and spacers 223. In this embodiment, the laser module 210 may be a package having at least one infrared laser diode for emitting one or two infrared laser beams (FIG. 2 shows two laser beams, not a limitation of the present invention), and one laser beam passes through the substrate 221, the lens 222_1, the DOE 224_1 and the substrate 225 to generates a first image having a pattern of the DOE 224_1, and the other laser beam passes through the substrate 221, the lens 222_2, the DOE 224_2 and the substrate 225 to generates a second image having a pattern of the DOE 224_2. It is noted that the first image or the second image can be simultaneously or sequentially generated, or only one of the first image and second image is generated according to the designer's consideration. However, according to the invention, the first image and the second image are sequentially generated. For example, the when the first image and the second image are simultaneously or sequentially generated, the first image and the second image form the projected image 104 of the projector 110.

In one embodiment, the infrared laser diode may be edge emitting type, plasma laser diode or surface emitting type such as a vertical-cavity surface-emitting laser (VCSEL). In addition, the lenses 222_1 and 222_2 may have the same focal length or different focal lengths.

The arrangements of the layers shown in FIG. 2 are for illustrative purpose only, as long as the lens module 220 is capable of generating the first image and the second image, the lens module 220 may have different designs. For example, the lens 222_1 or 222_2 may be a biconvex lens, or another lens may be positioned above the lens 222_1 or 222_2, or the DOEs 224_1 and 224_2 may be imprinted on the upper surface of the substrate 225. In addition, the substrate 225 may have a single DOE layer, and the DOE 224_1 is a left portion of the DOE layer, and the DOE 224_2 is a right portion of the DOE layer. These alternative designs shall fall within the scope of the present invention.

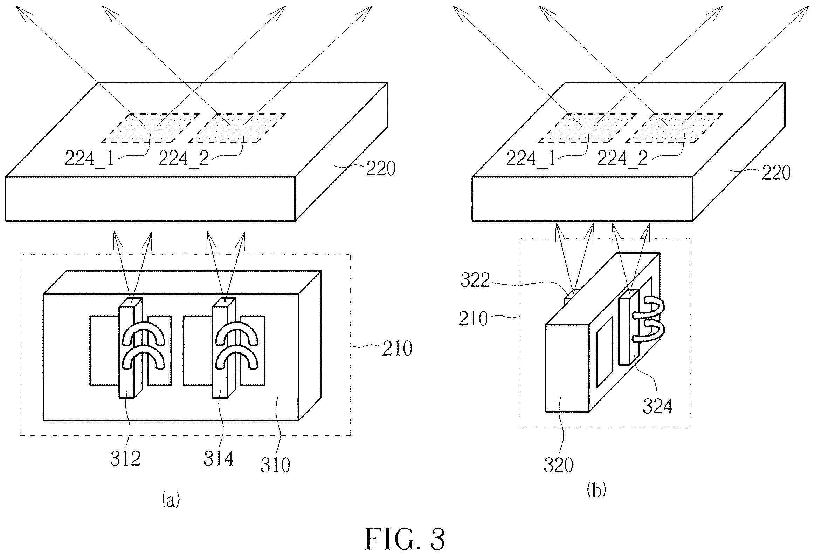

FIG. 3 shows the laser module 210 according to the embodiments of the present invention. As shown in FIG. 3(a), the laser module 210 comprises a submount 310 and two laser diodes 312 and 314, wherein the laser diodes 312 and 314 are bonded on the same side plane of the submount 310. In this embodiment, the laser beam generated by the laser diode 312 passes through the DOE 224_1 of the lens module 220 to generate the first image, and the laser beam generated by the laser diode 314 passes through the DOE 224_2 of the lens module 220 to generate the second image. In the embodiment shown in FIG. 3(b), the laser module 210 comprises a submount 320 and two laser diodes 322 and 324, wherein the laser diodes 322 and 324 are bonded on the different side planes of the submount 320. The laser beam generated by the laser diode 322 passes through the DOE 224_1 of the lens module 220 to generate the first image, and the laser beam generated by the laser diode 324 passes through the DOE 224_2 of the lens module 220 to generate the second image. In the embodiments shown in FIG. 3, the first image and the second image are overlapped when they are projected on the object 102.

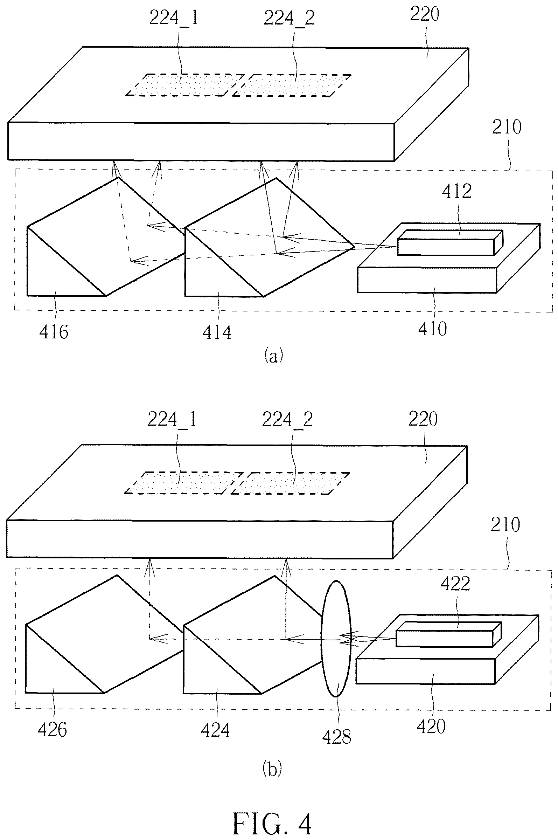

FIG. 4 shows the laser module 210 according to other embodiments of the present invention. As shown in FIG. 4(a), the laser module 120 comprises a submount 410, a laser diode 412 and two prisms 414 and 416, wherein a portion of a laser beam generated by the laser diode 412 is reflected by the prism 414, and another portion of the laser beam passes through the prism 414 and is reflected by the prism 416. The laser beam reflected by the prism 416 passes through the DOE 224_1 of the lens module 220 to generate the first image, and the laser beam reflected by the prism 414 passes through the DOE 224_2 of the lens module 220 to generate the second image. In the embodiment shown in FIG. 4(b), the laser module 120 comprises a submount 420, a laser diode 422, two prisms 424 and 426 and a lens 428, wherein a portion of a laser beam generated by the laser diode 422 passes through the lens 428 and is reflected by the prism 424, and another portion of the laser beam passes through the lens 428 and the prism 424 and is reflected by the prism 426. The laser beam reflected by the prism 426 passes through the DOE 224_1 of the lens module 220 to generate the first image, and the laser beam reflected by the prism 424 passes through the DOE 224_2 of the lens module 220 to generate the second image. In the embodiments shown in FIG. 4, the first image and the second image are overlapped when they are projected on the object 102.

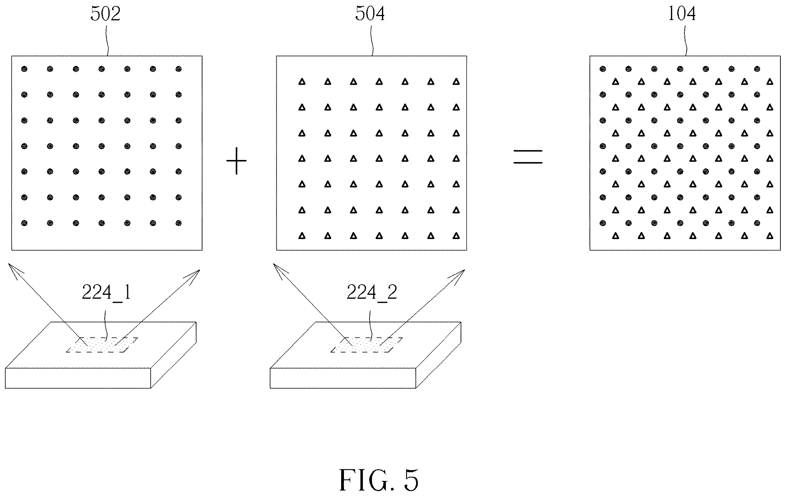

FIG. 5 shows generating the projected image 104 according to one embodiment of the present invention. As shown in FIG. 5, one laser beam pass through the DOE 224_1 of the lens module 220 to generate the first image 502 to the object 102, and another laser beam pass through the DOE 224_2 of the lens module 220 to generate the first image 504 to the object 102, where each of the first image 502 and the second image 504 have a plurality of light spots. The positions of the first image 502 and the second image 504 can be carefully designed to make the projected image 104 including the first image 502 and the second image 504 have higher light spot density (i.e. high resolution) as shown in FIG. 5.

It is noted that the patterns shown in FIG. 5 are for illustrative purposes only, and they are not limitations of the present invention. For example, the patterns of the first image 502 and the second image 504 (i.e. the patterns of the DOE 224_1 and 224_2) may be the same or different, and the density/resolution of the first image 502 and the second image 504 may be the same or different. In addition, the embodiment shown in FIG. 5 shows that the whole areas the first image 502 and the second image are almost overlapped, however, the overlap ratio of the first image 502 and 504 may be designed according to engineer's consideration. For example, the projector 110 can be designed to make only the left portion of the first image 502 and the right portion of the second image 504 be overlapped. These alternative designs shall fall within the scope of the present invention.

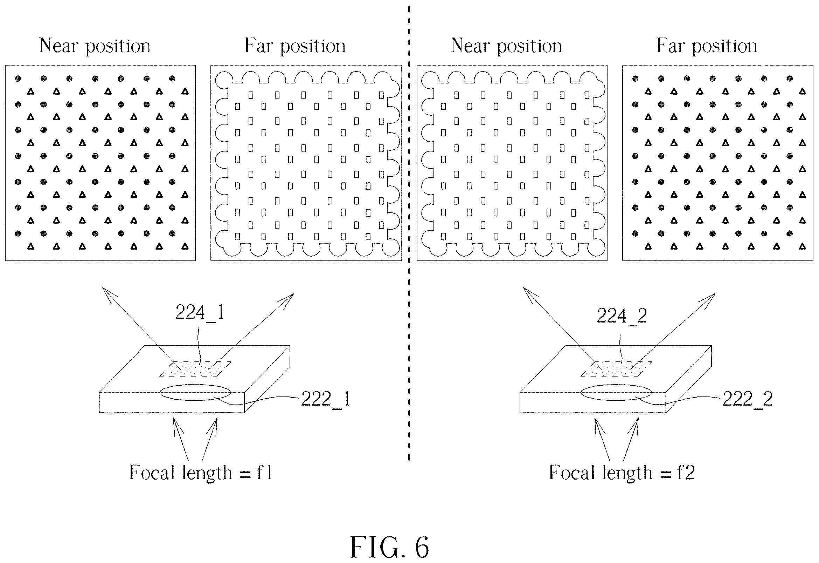

FIG. 6 shows the use of the projector 110 when the lenses 222_1 and 222_2 are designed to have different focal lengths according to one embodiment of the present invention. As shown in FIG. 6, the lens 222_1 has the focal length f1, and the lens 222_2 has the focal length f2, for example, f1 may be 0.2 meter while f2 is equal to 0.5 meter. In this embodiment, when the object 102 is close to the projector 110 (e.g. 0.15 meters), the first image outputted by the DOE 224_1 may be clear, and when the object 102 is far from the projector 110 (e.g. 0.75 meters), the first image outputted by the DOE 224_1 may be blurry. On the other hand, when the object 102 is close to the projector 110, the second image outputted by the DOE 224_2 may be blurry, and when the object 102 is far from the projector 110, the first image outputted by the DOE 224_2 may be clear. Therefore, since each of the lenses 222_1 and 222_2 has its corresponding working distance, the electronic device 100 can select one of the second image and the second image having clear patterns, and analyze the selected one to obtain the depth information of the projected image 104.

Regarding the control of the projector 110 shown in FIG. 6, the first image and the second image may be sequentially generated to the object 102, and the camera module 120 captures the image data corresponding to the first image and the second image, respectively, and the processor 130 determines which one of the first image and the second image is more clear, and the processor 130 selects and analyzes the clear one to obtain the depth information of the projected image. In other embodiments, the electronic device 100 may use other elements or methods capable of measuring the distance between the electronic device 100 and the object 102, and the controller 140 controls the projector 110 to generate the image corresponding to the lens whose focal length is closer to the measured distance. Taking FIG. 3(a) and FIG. 6 as an example, if the electronic device 100 determines that the distance between the electronic device 100 and the object 102 is small, the controller 140 may control the projector 110 to turn on the laser diode 312 to generate the laser beam to the lens 222_1 and the DOE 224_1 to generate the first image, meanwhile the laser diode 314 is turned off. If the electronic device 100 determines that the distance between the electronic device 100 and the object 102 is great, the controller 140 may control the projector 110 to turn on the laser diode 314 to generate the laser beam to the lens 222_2 and the DOE 224_2 to generate the second image, meanwhile the laser diode 312 is turned off.

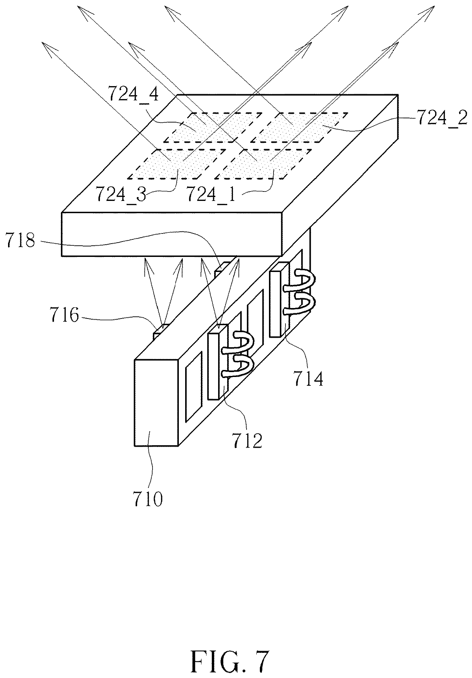

The embodiments 110 shown in FIGs. 2-6 only show two lenses 222_1 and 222_2 and two DOEs 224_1 and 224_2, however, the quantity of the lenses and the DOEs may be more than two (e.g. 1*N array, M*1 array, M*N array, where M and N are any suitable integers). FIG. 7 shows a laser module comprising a submount 710 having four laser diodes 712, 714, 716 and 718 bonded thereon, and a lens module comprising four DOEs 724_1-724_4. In the embodiment shown in FIG. 7, the laser diode 712 is arranged to generate a laser beam to the DOE 724_1 to generate a first image, the laser diode 714 is arranged to generate a laser beam to the DOE 724_2 to generate a second image, the laser diode 716 is arranged to generate a laser beam to the DOE 724_3 to generate a third image, and the laser diode 718 is arranged to generate a laser beam to the DOE 724_4 to generate a fourth image. In the embodiment shown in FIG. 7, the laser diodes 712, 714, 716 and 718 can be simultaneously turned on or sequentially turned on, or only a portion of the laser diodes 712, 714, 716 and 718 is/are turned on according to a working distance. However, according to the invention, the laser diodes are sequentially turned on. Because a person skilled in the art should understand the operations and applications of the embodiment shown in FIG. 7 after reading the aforementioned embodiments, further descriptions are omitted here.

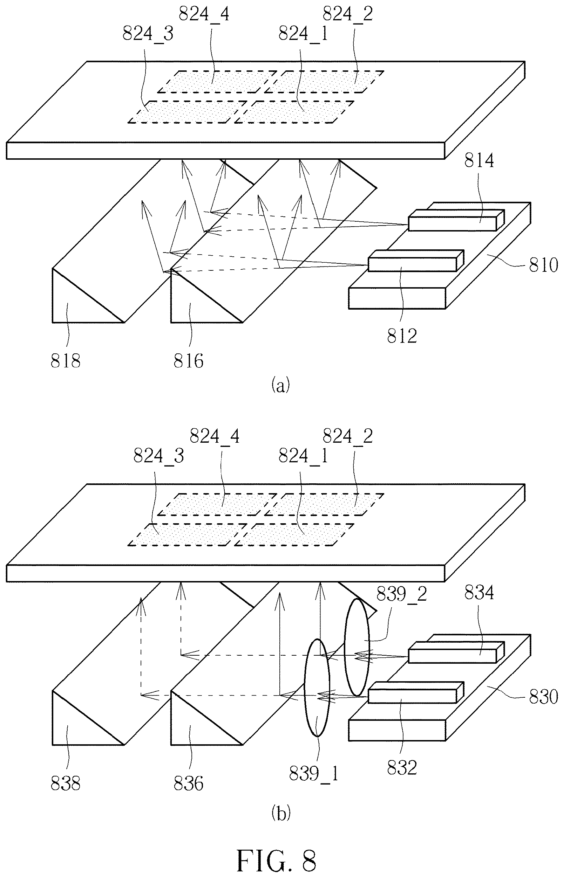

FIG. 8 shows the laser module shown in FIG. 7 according to one embodiment of the present invention. As shown in FIG. 8(a), the laser module comprises a submount 810, two laser diodes 812 and 814, and two prisms 816 and 818, wherein a portion of a laser beam generated by the laser diode 812 is reflected by the prism 816, and another portion of the laser beam passes through the prism 816 and is reflected by the prism 818; a portion of a laser beam generated by the laser diode 814 is reflected by the prism 816, and another portion of the laser beam passes through the prism 816 and is reflected by the prism 818. The laser beam generate by the laser diode 812 and reflected by the prism 816 passes through the DOE 824_1 of the lens module to generate the first image, the laser beam generate by the laser diode 814 and reflected by the prism 816 passes through the DOE 824_2 of the lens module to generate the second image, the laser beam generated by the laser diode 812 and reflected by the prism 818 passes through the DOE 824_3 of the lens module to generate the third image, and the laser beam generated by the laser diode 814 and reflected by the prism 818 passes through the DOE 824_4 of the lens module to generate the fourth image. In the embodiment shown in FIG. 8(b), the laser module comprises a submount 830, two laser diodes 832 and 834, two prisms 836 and 838, and two lenses 839_1 and 839_2, wherein a portion of a laser beam generated by the laser diode 832 passes through the lens 839_1 and is reflected by the prism 836, and another portion of the laser beam passes through the lens 839_1 and the prism 836 and is reflected by the prism 838; a portion of a laser beam generated by the laser diode 834 passes through the lens 839_2 and is reflected by the prism 836, and another portion of the laser beam passes through the lens 839_2 and the prism 836 and is reflected by the prism 838. The laser beam generate by the laser diode 832 and reflected by the prism 836 passes through the DOE 824_1 of the lens module to generate the first image, the laser beam generate by the laser diode 834 and reflected by the prism 836 passes through the DOE 824_2 of the lens module to generate the second image, the laser beam generated by the laser diode 832 and reflected by the prism 838 passes through the DOE 824_3 of the lens module to generate the third image, and the laser beam generated by the laser diode 834 and reflected by the prism 838 passes through the DOE 824_4 of the lens module to generate the fourth image.

Briefly summarized, in the projector of the present invention, the projector is capable of generating a plurality of images, and the images are generated sequentially to obtain the projected image with higher density/resolution and/or FOV, or only part of the images is/are generated based on a distance of the projector and the object to obtain the clearer projected image.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A projector (110),**comprising:**
a laser module (210), for generating at least one laser beam;
a lens module (220), comprising:
a plurality of lenses (222_1, 222_2), wherein each of the lenses (222_1, 222_2) is arranged to receive one of the at least one laser beam to generate a collimated laser beam; and
a plurality of diffractive optical elements (224_1, 224_2), wherein the diffractive optical elements (224_1, 224_2) correspond to the lenses (222_1, 222_2), respectively, and each of the diffractive optical elements (224_1, 224_2) is arranged to receive the collimated laser beam from the corresponding lens (222_1, 222_2) to generate an image,
wherein at least two of the lenses (222_1, 222_2) have different focal lengths that correspond to different working distances of the projector,
wherein the laser module (210) comprises a plurality of laser diodes (312, 314, 322, 324), the laser diodes (312, 314, 322, 324) are arranged to generate a plurality laser beams to the lenses (222_1, 222_2), respectively,
wherein the projector (110) is designed so that the laser diodes can be sequentially turned on to generate the laser beams to the lenses (222_1, 222_2) and the diffractive optical elements (224_1, 224_2) to generate the images, respectively, and at least a portion of the images are overlapped.

2. The projector (110) of claim 1, **characterized in that** quantity of the laser diodes (312, 314, 322, 324), quantity of lenses (222_1, 222_2) and quantity of the diffractive optical elements (224_1, 224_2) are the same.

3. The projector (110) of claim 1, **characterized in that** each of the images has a plurality of light spots, the images form a projected image of the projector (110), and a light spot density of the projected image is greater than that of each of the images.

4. The projector (110) of claim 1, **characterized by** being designed so that only one of the laser diodes (312, 314, 322, 324) is turned on to generate the laser beam to the corresponding lens (222_1, 222_2) and diffractive optical element (224_1, 224_2) to generate the image.

5. The projector (110) of claim 4, **characterized in that** at least two of the diffractive optical elements (224_1, 224_2) have different patterns.

6. The projector (110) of claim 1, **characterized in that** the laser module (210) comprises at least one laser diode (412, 422, 812, 814, 832, 834), the at least one laser diode (412, 422, 812, 814, 832, 834) is arranged to generate a plurality laser beams to the lenses (222_1, 222_2).

7. The projector (110) of claim 6, **characterized in that** quantity of the laser diodes (412, 422, 812, 814, 832, 834) is less than quantity of lenses (222_1, 222_2) or quantity of the diffractive optical elements (224_1, 224_2, 524_1, 824_2, 824_3, 824_4).

8. The projector (110) of claim 6, **characterized in that** the at least one laser diode (412, 422, 812, 814, 832, 834) is arranged to generate the laser beams to the lenses (222_1, 222_2) by using at least one prism (414, 416, 424, 426, 816, 818, 836, 838).

9. An electronic device (100), **characterized by:**
a projector (110) according to any one of the preceding claims; and
a camera module (120), for capturing the region of the surrounding environment to generate image data; and
a processor (130), for analyzing the image data to obtain depth information of the image data.

## Patentansprüche

1. Projektor (110), aufweisend:
ein Lasermodul (210) zum Generieren mindestens eines Laserstrahls;
ein Linsenmodul (220), aufweisend:
eine Mehrzahl von Linsen (222_1, 222_2), wobei jede der Linsen (222_1, 222_2) eingerichtet ist, einen des mindestens einen Laserstrahls zu empfangen, um einen gerichteten Laserstahl zu erzeugen; und
eine Mehrzahl von beugenden optischen Elementen (224_1, 224_2), wobei die beugenden optischen Elemente (224_1, 224_2) jeweils zu den Linsen (222_1, 222_2) korrespondieren und jedes der beugenden optischen Elemente (224_1, 224_2) eingerichtet ist, den gerichteten Laserstrahl von der korrespondierenden Linse (222_1, 222_2) zu empfangen, um ein Bild zu erzeugen,
wobei mindestens zwei der Linsen (222_1, 222_2) unterschiedliche Brennweiten aufweisen, welche zu unterschiedlichen Betriebsabständen des Projektors korrespondieren,
wobei das Lasermodul (210) eine Mehrzahl von Laserdioden (312, 314, 322, 324) aufweist, wobei die Laserdioden (312, 314, 322, 324) so eingerichtet sind, dass sie eine Mehrzahl von Laserstrahlen jeweils zu den Linsen (222_1, 222_2) erzeugen,
wobei der Projektor (110) so ausgelegt ist, dass die Laserdioden sequentiell eingeschaltet werden können, um jeweils die Laserstrahlen zu den Linsen (222_1, 222_2) und den beugenden optischen Elementen (224_1, 224_2) zu erzeugen, um die Bilder zu erzeugen, und mindestens ein Teil der Bilder überlappt.

2. Projektor (110) gemäß Anspruch 1, **dadurch gekennzeichnet, dass** eine Anzahl der Laserdioden (312, 314, 322, 324), eine Anzahl der Linsen (222_1, 222_2) und eine Anzahl der beugenden optischen Elemente (224_1, 224_2) die gleichen sind.

3. Projektor (110) gemäß Anspruch 1, **dadurch gekennzeichnet, dass** jedes der Bilder eine Mehrzahl von Lichtpunkten aufweist, die Bilder ein projiziertes Bild des Projektors (110) bilden und eine Lichtpunktdichte des projizierten Bilds größer ist als diejenige von jedem der Bilder.

4. Projektor (110) gemäß Anspruch 1, **dadurch gekennzeichnet, dass** er so ausgelegt ist, dass nur eine der Laserdioden (312, 314, 322, 324) eingeschaltet ist, um den Laserstrahl zu der korrespondierenden Linse (222_1, 222_2) und dem beugenden optischen Element (224_1, 224_2) zu erzeugen, um das Bild zu erzeugen.

5. Projektor (110) gemäß Anspruch 4, **dadurch gekennzeichnet, dass** mindestens zwei der beugenden optischen Elemente (224_1, 224_2) unterschiedliche Strukturen aufweisen.

6. Projektor (110) gemäß Anspruch 1, **dadurch gekennzeichnet, dass** das Lasermodul (210) mindestens eine Laserdiode (412, 422, 812, 814, 832, 834) aufweist, wobei die mindestens eine Laserdiode (412, 422, 812, 814, 832, 834) eingerichtet ist, eine Mehrzahl von Laserstrahlen zu den Linsen (222_1, 222_2) zu erzeugen.

7. Projektor (110) gemäß Anspruch 6, **dadurch gekennzeichnet, dass** eine Anzahl der Laserdioden (412, 422, 812, 814, 832, 834) kleiner ist als eine Anzahl der Linsen (222_1, 222_2) oder eine Anzahl der beugenden optischen Elemente (224_1, 224_2, 524_1, 824_2, 824_3, 824_4).

8. Projektor (110) gemäß Anspruch 6, **dadurch gekennzeichnet, dass** die mindestens eine Laserdiode (412, 422, 812, 814, 832, 834) eingerichtet ist, die Laserstrahlen zu den Linsen (222_1, 222_2) durch Verwenden mindestens eines Prismas (414, 416, 424, 426, 816, 818, 836, 838) zu erzeugen.

9. Elektronikvorrichtung (100), **gekennzeichnet durch**:
einen Projektor (110) gemäß einem der vorstehenden Ansprüche; und
ein Kameramodul (120) zum Aufnehmen des Bereichs der umliegenden Umgebung, um Bilddaten zu erzeugen; und
einen Prozessor (130) zum Analysieren der Bilddaten, um Tiefeninformationen der Bilddaten zu erhalten.

## Revendications

1. Projecteur (110), **comprenant** :
un module laser (210), pour la génération d'au moins un faisceau laser ;
un module de lentille (220), comprenant :
une pluralité de lentilles (222_1, 222_2), dans lequel chacune des lentilles (222_1, 222_2) est agencée pour recevoir l'un de l'au moins un faisceau laser pour générer un faisceau laser collimaté ; et
une pluralité d'éléments optiques diffractifs (224_1, 224_2), dans lequel les éléments optiques diffractifs (224_1, 224_2) correspondent respectivement aux lentilles (222_1, 222_2), et chacun des éléments optiques diffractifs (224_1, 224_2) est agencé pour recevoir le faisceau laser collimaté de la lentille correspondante (222_1, 222_2) pour générer une image,
dans lequel au moins deux des lentilles (222_1, 222_2) ont des longueurs focales différentes qui correspondent à des distances de travail différentes du projecteur,
dans lequel le module laser (210) comprend une pluralité de diodes laser (312, 314, 322, 324), les diodes laser (312, 314, 322, 324) sont agencées pour générer une pluralité de faisceaux laser vers les lentilles (222_1, 222_2), respectivement,
dans lequel le projecteur (110) est conçu de sorte que les diodes laser puissent être allumées séquentiellement pour générer les faisceaux laser vers les lentilles (222_1, 222_2) et les éléments optiques diffractifs (224_1, 224_2) pour générer les images, respectivement, et au moins une partie des images est superposée.

2. Projecteur (110) de la revendication 1, **caractérisé en ce qu'une** quantité des diodes laser (312, 314, 322, 324), une quantité de lentilles (222_1, 222_2) et une quantité des éléments optiques diffractifs (224_1, 224_2) sont identiques.

3. Projecteur (110) de la revendication 1, **caractérisé en ce que** chacune des images a une pluralité de points lumineux, les images forment une image projetée du projecteur (110), et une densité de points lumineux de l'image projetée est supérieure à celle de chacune des images.

4. Projecteur (110) de la revendication 1, **caractérisé en ce qu'il** est conçu pour qu'une seule des diodes laser (312, 314, 322, 324) soit allumée pour générer le faisceau laser vers la lentille correspondante (222_1, 222_2) et un élément optique diffractif (224_1, 224_2) pour générer l'image.

5. Projecteur (110) de la revendication 4, **caractérisé en ce qu'au** moins deux des éléments optiques diffractifs (224_1, 224_2) ont des motifs différents.

6. Projecteur (110) de la revendication 1, **caractérisé en ce que** le module laser (210) comprend au moins une diode laser (412, 422, 812, 814, 832, 834), l'au moins une diode laser (412, 422, 812, 814, 832, 834) est agencée pour générer une pluralité de faisceaux laser vers les lentilles (222_1, 222_2).

7. Projecteur (110) selon la revendication 6, **caractérisé en ce que** la quantité de diodes laser (412, 422, 812, 814, 832, 834) est inférieure à la quantité de lentilles (222_1, 222_2) ou à la quantité d'éléments optiques diffractifs (224_1, 224_2, 524_1, 824_2, 824_3, 824_4).

8. Projecteur (110) selon la revendication 6, **caractérisé en ce que** l'au moins une diode laser (412, 422, 812, 814, 832, 834) est agencée pour générer les faisceaux laser vers les lentilles (222_1, 222_2) en utilisant au moins un prisme (414, 416, 424, 426, 816, 818, 836, 838).

9. Dispositif électronique (100), **caractérisé par** :
un projecteur (110) selon l'une quelconque des revendications précédentes ; et
un module de caméra (120), pour capturer la région du milieu environnant pour générer des données d'image ; et
un processeur (130), pour analyser les données d'image pour obtenir des informations de profondeur des données d'image.
